# EUROPEAN PATENT APPLICATION

(11) **EP 2 160 055 A1**
(43) Date of publication of application: **03.03.2010**
(21) Application number: 09382160.1
(22) Date of filing: 27.08.2009
(51) Int. Cl.: H04W 16/06, H04W 16/14, H04W 24/02

(54) **optimization of radio access resources in a mobile network**

(30) Priority: 28.08.2008 ES 200802510
(71) Applicant: Vodafone España, S.A., 28108 Alcobendas (Madrid) (ES); Vodafone Group PLC, Newbury Berkshire RG14 2FN (GB)
(72) Inventor: Garriga Muniz, Beatriz, 28050, Madrid (ES); Dominguez Romero, Francisco Javier, 28050, Madrid (ES)
(74) Representative: Carpintero Lopez, Francisco

(57) **Abstract**

A method of optimizing radio access resources within a sector in a mobile network, wherein said sector has at least a GSM cell and a UMTS-900 cell and shares at least GSM-900 cell radio resources and UMTS-900 cell radio resources, the method comprising the steps of: checking at predetermined intervals whether there is at least one user equipment supporting UMTS-900 within said GSM cell or UMTS-900 cell; and if there are no user equipments supporting UMTS-900 within said GSM cell or UMTS-900 cell, reconfiguring said UMTS-900 radio resources into a plurality of GSM-900 radio resources. A network entity of a mobile communications network comprising means for carrying out the method.

## Description

### FIELD OF THE INVENTION

The present invention relates to mobile or cellular networks having sites which share 2G and 3G resources. In particular, the present invention relates to the optimization of radio access resources in those networks.

### STATE OF THE ART

The current picture of many operators of mobile networks and services is an advanced deployment of UMTS (Universal Mobile Telecommunications System) in the 2100 MHz band together with the GSM-DCS system (Global System for Mobile communications; Digital Cellular System).

European patent EP-1143759-B1 describes a system having base stations capable of working in different modes, such as DECT, GSM, UMTS or IS95. The base stations are connected to a controller which monitors and assigns the radio resources and various radio transmission modes of the base stations. When a subscriber reaches a cell covered by one of the base stations, it is checked which of the possible transmission modes are available and a priority list is created. The subscriber terminal can then check which of the modes of the priority list it can use, and selects one, if possible.

The coverage difference between UMTS and GSM has led to the use of the 900 MHz band also for the UMTS system. This is already standardised in 3GPP Release 6 and is called "band VIII". The coverage of UMTS-900 is equal or better than the GSM-900 coverage. In many countries, it is already possible to deploy UMTS in the 900 MHz. The initial deployment is already being carried out in the rural areas, since the GSM traffic in urban ones is still very high, as a consequence of which it is not possible to dedicate the 900 MHz band to UMTS.

However, there are still very few mobile phones (also called user equipment) supporting UMTS900-UMTS2100-GSM. The first mobile phones supporting this technology are expected to be introduced in the market at the end of 2008. The amount of mobile phones supporting UMTS-900 will therefore not be high, especially in rural areas. This implies that, for several months or even years, there will be UMTS-900 radio equipment which will stand idle, especially in rural areas, because there will be many sites having UMTS-900 network equipment but without user equipments supporting UMTS-900 connected.

Moreover, even when the number of mobile phones increases, there will be sites offering more than one UMTS-900 carrier. However there will be certain moments of the day in which the UMTS-900 traffic is so low, especially in rural areas, that at least one carrier will stand idle.

Therefore, there is a need of optimizing different radio access resources using the same frequency bands within the cells in a mobile network.

### SUMMARY OF THE INVENTION

The present invention is intended to solve the above mentioned need.

It is a primary aim of the present invention to provide a method of optimizing radio access resources within a sector in a mobile network, wherein the sector has at least a GSM cell and a UMTS-900 cell and shares at least GSM-900 cell radio resources and UMTS-900 cell radio resources. The method comprises the steps of checking at predetermined intervals whether there is at least one user equipment supporting UMTS-900 within the GSM cell or UMTS-900 cell; and if there are no user equipments supporting UMTS-900 within the GSM cell or UMTS-900 cell, reconfiguring the UMTS-900 radio resources into a plurality of GSM-900 radio resources.

In a particular embodiment, if there is at least one user equipment supporting UMTS-900 within the GSM cell or UMTS-900 cell and those UMTS-900 radio resources within the cell are a single UMTS-900 carrier, no reconfiguration is carried out.

Alternatively, if there is at least one user equipment supporting UMTS-900 within the GSM cell or UMTS-900 cell and those UMTS-900 radio resources within the cell are a single UMTS-900 carrier, reconfiguring that single UMTS-900 carrier into a plurality of GSM-900 radio resources if that at least one user equipment supporting UMTS-900 is in idle mode; or either in idle mode or connected with a voice call.

In another particular embodiment, if there is at least one user equipment supporting UMTS-900 within the UMTS-900 cell and those UMTS-900 radio resources within the sector are at least two UMTS-900 carriers, checking whether the aggregated UMTS-900 traffic is under a certain threshold; and if that aggregated UMTS-900 traffic is under that threshold, reconfiguring at least one of those UMTS-900 carriers into a plurality of GSM-900 radio resources.

The step of checking whether there is at least one user equipment supporting UMTS-900 within the GSM cell can be done at the BSC on which said cell is dependent, or at the RNC on which said cell is dependent, or at both the BSC and the RNC.

Preferably, the step of reconfiguring the UMTS-900 radio resources into a plurality of GSM-900 radio resources is done by switching off the UMTS-900 carriers through a NBAP cell delete procedure and by switching on a plurality of GSM-900 TRX.

It is another aim of the present invention to provide a method of reconfiguring radio access resources within a sector having at least a GSM cell and a UMTS-900 cell in a mobile network, wherein the UMTS-900 cell comprises one UMTS-900 carrier and the GSM cell comprises a plurality of GSM-900 radio resources, and wherein that UMTS-900 carrier has been switched off and at least part of those GSM-900 radio resources have been switched on, the method comprising the steps of: checking at predetermined intervals whether there is at least one user equipment supporting UMTS-900 within the GSM cell; and if there is no user equipment supporting UMTS-900 within that GSM cell, no reconfiguration is carried out.

In a particular embodiment, when it is detected that there is at least one user equipment supporting UMTS-900 within that GSM cell, checking whether the GSM-900 traffic is below a certain threshold; and if that GSM-900 traffic is below that threshold, reconfiguring the GSM-900 radio resources into that UMTS-900 carrier. This step of reconfiguring the GSM-900 radio resources into that UMTS-900 carrier is done if the at least one user equipment supporting UMTS-900 is connected in a state for exchanging packet data traffic in the GSM cell, or is connected in a state for packets or circuit, or is in idle mode.

In an alternative embodiment, the sector further comprises a collocated UMTS-2100 cell having UMTS-2100 radio resources. In this case, the method has the additional steps of: if the at least one user equipment supporting UMTS-900 supports also UMTS-2100, checking whether the GSM-900 traffic is above a threshold and, if that GSM-900 traffic is above that threshold, keeping the traffic associated to that at least one user equipment on the UMTS-2100 radio resources, thus maintaining the corresponding GSM-900 radio resources on. That step of keeping the traffic on the UMTS-2100 resources is done if the at least one user equipment supporting UMTS-900 is in a state for exchanging packets, or in a connected state for packets or circuit, or is in idle mode.

It is another aim of the present invention to provide a method of reconfiguring radio access resources within a sector having at least a GSM cell and a UMTS-900 cell in a mobile network, wherein the UMTS-900 cell comprises more than one UMTS-900 carriers and the GSM cell comprises a plurality of GSM-900 radio resources, and wherein one of the UMTS-900 carriers is on and the remaining ones have been switched off and at least part of said GSM-900 radio resources have been switched on. The method comprises the steps of: checking whether the UMTS-900 traffic is above a certain threshold; and if that UMTS-900 traffic is below that threshold, no reconfiguration is done; and if the UMTS-900 traffic is above that threshold, checking if the GSM-900 traffic is below a certain threshold and if that GSM-900 traffic is below that threshold, reconfiguring the GSM-900 radio resources into at least part of the UMTS-900 radio resources, while if the GSM-900 traffic is above that threshold, no reconfiguration is done.

Finally, it is an aim of the present invention to provide a network entity of a mobile communications network comprising means for carrying out the above-mentioned method.

The advantages of the proposed invention will become apparent in the description that follows.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 shows a schematic representation of a base station wherein both GSM-900 radio access resources and UMTS-900 radio access resources coexist.
Figure 2 shows the layer 3 of GSM as specified in the 3GPP Standard.
Figure 3 shows a flow diagram of the reconfiguration according to an embodiment of the present invention.
Figure 4 shows a flow diagram of the reconfiguration according to an embodiment of the present invention.
Figure 5 shows a flow diagram of the reconfiguration according to an embodiment of the present invention.
Figure 6 shows a flow diagram of the reconfiguration according to an embodiment of the present invention.
Figure 7 shows a flow diagram of the reconfiguration according to an embodiment of the present invention.

### DESCRIPTION OF PREFERRED EMBODIMENTS OF THE INVENTION

The implementation of the present invention can be carried out as follows:

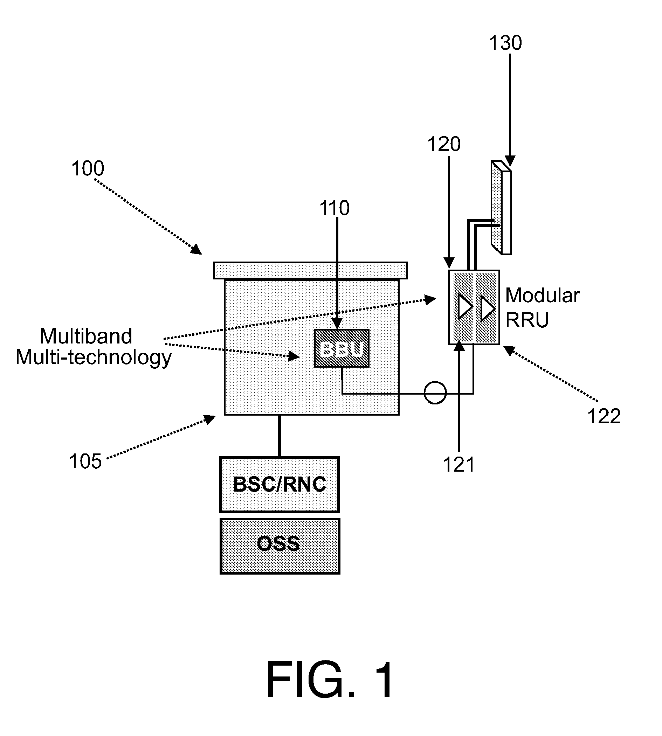

Figure 1 shows a schematic representation of a base station 100 wherein both GSM-900 radio access resources and UMTS-900 radio access resources coexist. It comprises a Base Band Unit (BBU) 110 connected to a modular Remote Radio Unit (RRU) 120, in turn connected to a transmitting/receiving antenna 130. The Base Band Unit (BBU) 110 manages the two technologies (GSM and UMTS). The Remote Radio Unit 120 comprises different radio units of different technologies. In particular, some of them comprise GSM-900 transceivers and some of them comprise UMTS-900 carriers, and the units can be assigned to GSM or UMTS technologies with a software change (this is what the industry calls "Software Defined Radio"). Additionally, the Remote Radio Unit 120 can also comprise UMTS-2100 carriers. In this particular example, two radio units 121 122 are illustrated. In a non-limiting example, one of these radio units 121 comprises one transmitter and two receivers (1T2R) and the other one 122 comprises a single UMTS-900 carrier. The Remote Radio Head (RRH) 105 of the base station 100 is also connected to a BSC/RNC (Base Station Controller/ Radio Network Controller) and the corresponding Operations Support System (OSS).

Although figure 1 illustrates a single Radio Access Network (RAN) base station (a single RRU (Remote Radio Unit), single controller (BSC/RNC) and single Base band unit (BBU) capable of supporting GSM-900 and UMTS-900 in the same sector), comprising both GSM-900 and UMTS-900 resources, both technologies can alternatively be implemented in separate equipment, located within the same site. In other words, the important aspect is that both technologies coexist, sharing the same physical resources (the band of 900 MHz) covering substantially the same coverage area, independently from having a separate base transceiver station (BTS) and a separate Node B, or an integrated BTS plus node B. Although a single sector is shown in figure 1, several sectors or cells could be alternatively located within the same site.

In the context of the present invention, the term "network entity" is intended to mean any base station, node B or the like, which comprises at least one sector sharing GSM-900 resources and UMTS-900 resources.

Thus, the invention requires a base station 100 with co-located (within the same site) GSM-900 and UMTS-900 radio access resources, as defined in standard TR 25.816.

Normally, if a sector shares both GSM-900 cell and UMTS-900 cell radio resources, as shown in figure 1, the UMTS-900 resources are switched on and part of the GSM-900 resources are switched off, in order to satisfy the needs of the potential UMTS-900 users.

The invention proposes to count the mobile phones (from now on referred to as user equipment or UE) supporting UMTS-900, thanks to the transmission of the UTRAN (UMTS Terrestrial Radio Access Network) capabilities in the GERAN (GSM-EDGE Radio Access Network), which are explained later on. This step of counting the number of UEs within a sector can be done through the GSM system or through the UMTS system of through both.

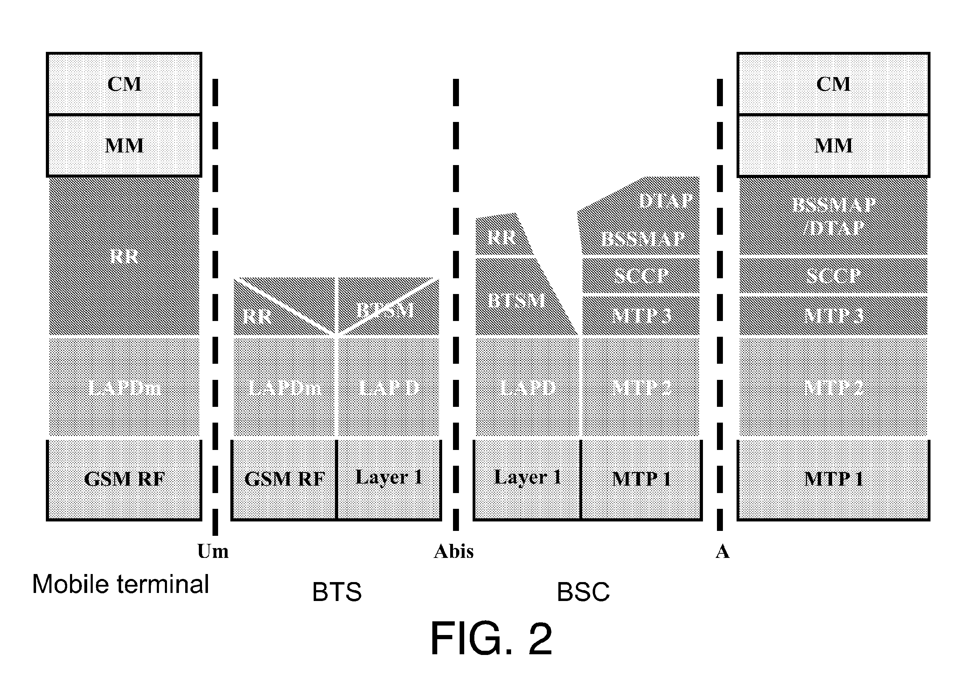

As shown in figure 2, in the 3GPP Standard the layer 3 of GSM is specified. The UE has to send its radio capabilities to the network. These radio capabilities are defined in the GSM standard 44.018, included in the 3GPP TS 44.018, and more specifically, in the UTRAN classmark change message. This message is sent on the main dedicated control channel (DCCH) by the mobile station (user equipment) to the network to indicate a UTRAN Classmark Change or as a response to a UTRAN classmark enquiry. An UTRAN Classmark information element includes the ASN.1 coding of the Inter RAT Handover Info with Inter RAT capabilities (included in the 3GPP TS 25.331). Within these capabilities, there is one field indicating the support of UMTS 900 MHz. In fact, the user equipment always sends its radio frequency capabilities (i.e. a field indicating support for GSM-900, GSM-1800, UMTS-2100, UMTS-900, etc.).

Thanks to this information, the BSC knows if there are any user equipments connected to the GSM cell supporting UMTS. Afterwards, the BSC sends a *Classmark Enquiry* message to the user equipment to discover whether it supports UMTS in the 900 band.

This process of counting the user equipment supporting UMTS-900 is repeated at predetermined intervals and, when it is detected that there are no user equipments within the GSM cell or the UMTS900 cell supporting UMTS-900, UMTS-900 radio resources are reconfigured into GSM-900 radio resources.

The step of reconfiguring the UMTS-900 resources (carrier or carriers) into GSM-900 resources (TRX) is done by switching off the UMTS-900 carriers and switching on the GSM-900 TRX. To switch-off the UMTS carriers, the well-known NBAP cell delete procedure according to the 3GPP TS 25.433 Standard is used. And for the creation of GSM carriers the standard procedures as in 3GPP TS 12.22 are used.

Optionally, a timer can be added in order to govern a delay until the reconfiguration is done, to avoid hysteresis and continuous reconfigurations of the carrier.

The different possibilities concerning these reconfigurations are explained next, in relation to different examples.

### Example 1: There is one UMTS-900 carrier in the sector and several GSM-900 frequencies

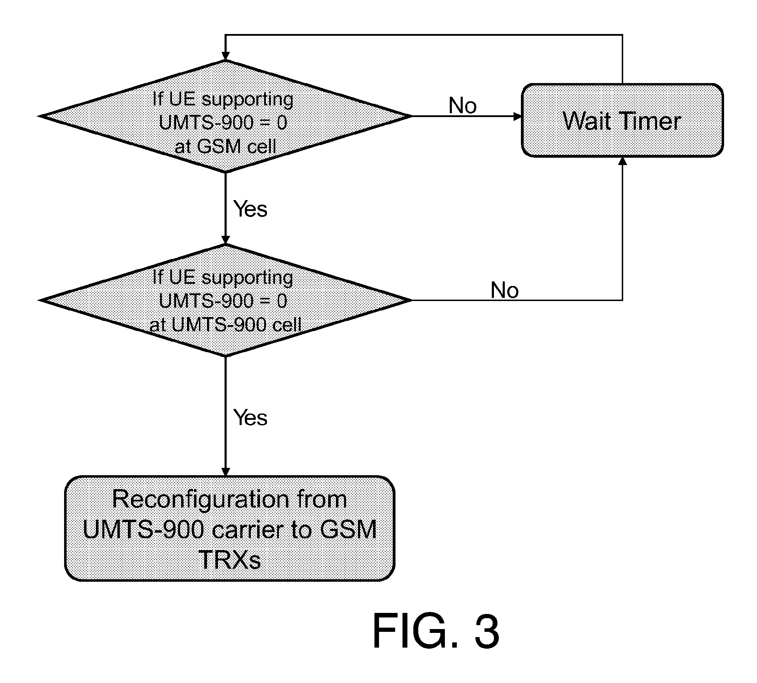

Figure 3 shows a flow diagram of a scenario in which the UMTS-900 radio resources are a single UMTS-900 carrier. Among the GSM-900 resources (TRX), some of them are switched off (in order to leave radio spectrum for the UMTS-900 carrier and thus satisfy the needs of potential UMTS-900 users) and some of them are switched on, since switching off all the GSM-900 resources makes no sense.

According to the invention, it is repeatedly checked (preferably, at predetermined intervals) whether there is at least one user equipment supporting UMTS-900 within the GSM cell or the UMTS-900 cell or not and, if there are no user equipments supporting UMTS-900, the UMTS-900 carrier is reconfigured into GSM-900 radio resources (TRX) in order to have more GSM resources. As illustrated in figure 3, in this particular example this checking or counting is done both at the BSC on which the GSM radio resources are dependent and at the RNC on which the UMTS-900 carrier is dependent.

If, on the contrary, there is at least one user equipment supporting UMTS-900 within the GSM cell or the UMTS-900 cell, there are different possibilities of reconfiguration. The operator decides which possibility to implement.

In a preferred embodiment, if there is at least one user equipment supporting UMTS-900 within the GSM cell or UMTS-900 cell, no reconfiguration is carried out. In other words, it is enough if it is detected that there is one user equipment supporting UMTS-900 to decide to dedicate to it the UMTS-900 carrier. This is illustrated in the data flow of figure 3 wherein, if either the counting of user equipments at the BSC or at the RNC detects the presence of a user equipment supporting UMTS-900 within the cells, a timer indicates to keep on waiting until a new checking of user equipment supporting UMTS-900 is initiated.

In an alternative embodiment, not illustrated in figure 3, if there is at least one user equipment supporting UMTS-900 within the GSM cell or UMTS-900 cell, a reconfiguration from UMTS-900 carrier into GSM-900 radio resources (TRX) is done but only if that user equipment supporting UMTS-900 is in idle mode (that is to say, it is not consuming resources).

In an alternative embodiment, not illustrated in figure 3, if there is at least one user equipment supporting UMTS-900 within the GSM cell, a reconfiguration from UMTS-900 carrier into GSM-900 radio resources (TRX) is done if that user equipment supporting UMTS-900 is either in idle mode (that is to say, it is not consuming UMTS-900 resources) or connected with a voice call (that is to say, is consuming GSM-900 resources for voice calls, but not for video calls or packets exchange). This alternative implies that the UMTS-900 carrier is kept on only if the at least one user equipment supporting UMTS-900 is connected in packet state or video call.

### Example 2: There is more than one UMTS-900 carrier in the sector and several GSM-900 frequencies

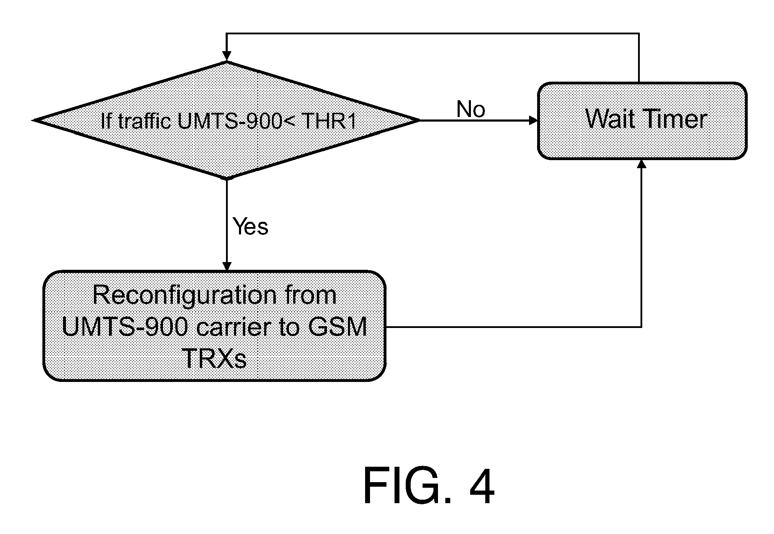

Figure 4 shows a flow diagram of a scenario in which the UMTS-900 radio resources are two or more UMTS-900 carriers. Like in the example 1, this scenario assumes that the UMTS-900 resources (the carriers) are switched on and among the GSM-900 resources (TRXs), some of them are switched off (in order to leave radio spectrum for the UMTS-900 carriers and thus satisfy the needs of potential UMTS-900 users) and some of them are switched on, since switching off all the GSM-900 resources makes no sense.

According to this embodiment, it is assumed that there are UMTS-900 users (at least one) connected to the UMTS-900 cell. It is repeatedly checked (preferably, at predetermined intervals) whether the aggregated UMTS-900 traffic within the cell is under a certain threshold THR1. This threshold THR1 is defined by the mobile network operator. If the aggregated UMTS-900 traffic is under that threshold THR1, it is decided to reconfigure at least one of the UMTS-900 carriers into a plurality of GSM-900 radio resources (TRX): Since the aggregated traffic does not occupy all the UMTS-900 carriers, at least one of them can be reconfigured. If there are only two UMTS-900 carriers, only one of those carriers is reconfigured, leaving the other one in order to satisfy the needs of the potential UMTS-900 users. If, on the contrary, there are more than two UMTS-900 carriers, the system decides to reconfigure one or more depending on the aggregated UMTS-900 traffic. This is decided by the network operator. Depending on the number of user equipment supporting UMTS-900, there can be certain moments of the day in which there is not enough traffic to occupy all the UMTS-900 carriers; as a consequence, if no reconfiguration into GSM-900 is carried out, there is a waste of resources. In order to avoid this waste of resources, a reconfiguration from the 2^{nd} and/or 3^{rd} UMTS-900 carrier to GSM is done when the aggregated UMTS-900 traffic is low.

### Example 3: There is one UMTS-900 carrier in the cell and only GSM-900 resources are switched on due to a previous reconfiguration from that UMTS-900 carrier, which is in a stand-by mode

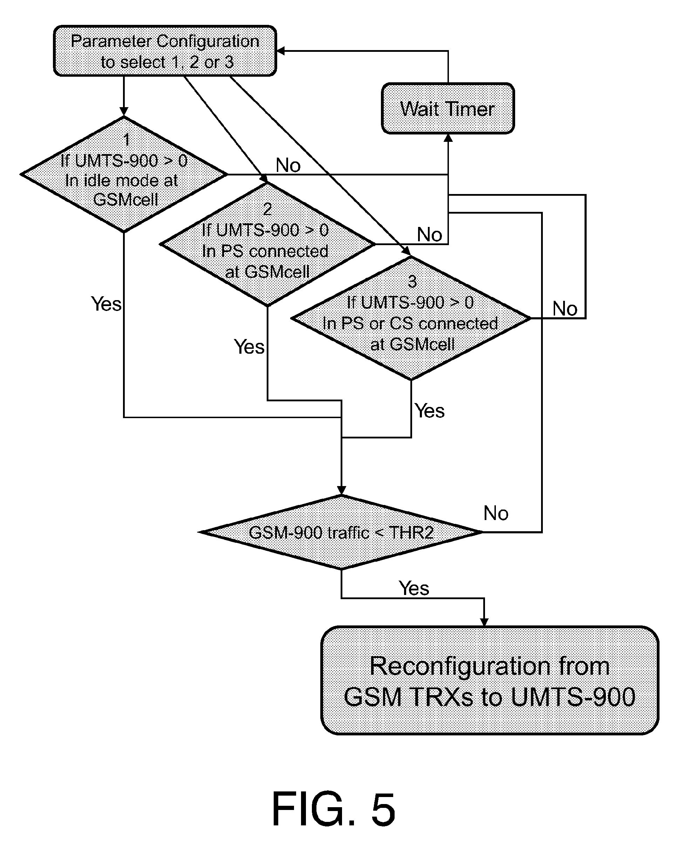

Figure 5 shows a flow diagram of a scenario in which the UMTS-900 radio resources are a single UMTS-900 carrier. This UMTS-900 carrier is in the stand-by mode (it is switched off and ready to be used when required) and the GSM-900 resources (TRX) are switched on, as a consequence of carrying out a method of optimizing the radio resources in the sector (see examples 1 and 2).

According to the invention, it is repeatedly checked (preferably, at predetermined intervals) whether there is at least one user equipment supporting UMTS-900 within the GSM cell or not and, if there is no user equipment supporting UMTS-900 within the GSM cell, no reconfiguration is carried out, because no user equipment supporting UMTS-900 is demanding radio resources. This checking or counting is done at the BSC on which the GSM radio resources are dependent.

Besides, when it is detected that there is at least one user equipment supporting UMTS-900 within the GSM cell, it is checked whether the GSM-900 traffic (allocated in the reconfigured GSM-900 resources) is below a certain threshold THR2, imposed by the operator. If that GSM-900 traffic is below that threshold THR2, the GSM-900 radio resources are reconfigured into the UMTS-900 radio resources available at the sector (in this example, one UMTS-900 carrier).

The above mentioned reconfiguration into UMTS-900 resources can be implemented according to different possibilities. Once evaluated that the GSM-900 traffic is below a threshold THR2, the mode of operation of the user equipment supporting UMTS-900 detected within the GSM cell can be taken into account when deciding to reconfigure or not. The operator decides which possibility to implement. These different possibilities are enumerated next:

In a particular embodiment, the step of reconfiguring the GSM-900 radio resources (TRX) into the single UMTS-900 carrier is done if the user equipment supporting UMTS-900 which has been detected within the GSM cell is connected in a state for exchanging (transmitting and/or receiving) packets (that is to say, if the user equipment is demanding a service specific of UMTS). This situation gives preference to the GSM-900 users over the UMTS-900 users demanding a circuit switched state. This is illustrated in figure 5 (parameter configuration 2), wherein PS stands for *packet switch.*

In an alternative embodiment, the step of reconfiguring the GSM-900 radio resources (TRX) into the single UMTS-900 carrier is done if the user equipment supporting UMTS-900 which has been detected within the GSM cell is connected in a state for exchanging packets or is connected in a mode for circuit (that is to say, having an active voice call). In this situation, UMTS-900 users demanding any service are given preference over the GSM-900 ones. This is illustrated in figure 5 (parameter configuration 3) wherein PS stands for *packet switch* and CS stands for *circuit switch.*

In another alternative embodiment, the step of reconfiguring the GSM-900 radio resources (TRX) into the single UMTS-900 carrier is done if the user equipment supporting UMTS-900 which has been detected within the GSM cell is in idle mode (that is to say, it is not consuming resources but it is potentially going to consume them). As can be observed, this requirement is the most favourable one for the potential UMTS-900 users, because it means that it is enough to detect that a user equipment supporting UMTS-900 is within the cell, to trigger the process of reconfiguring into UMTS-900. This is illustrated in figure 5 (parameter configuration 1).

As can be observed in figure 5, the choice of one of these three alternatives depends of the parameters configuration of the operator.

### Example 4: There are more than one UMTS-900 carriers in the sector and at least part of the GSM-900 resources are switched on due to a previous reconfiguration from the UMTS-900 resources

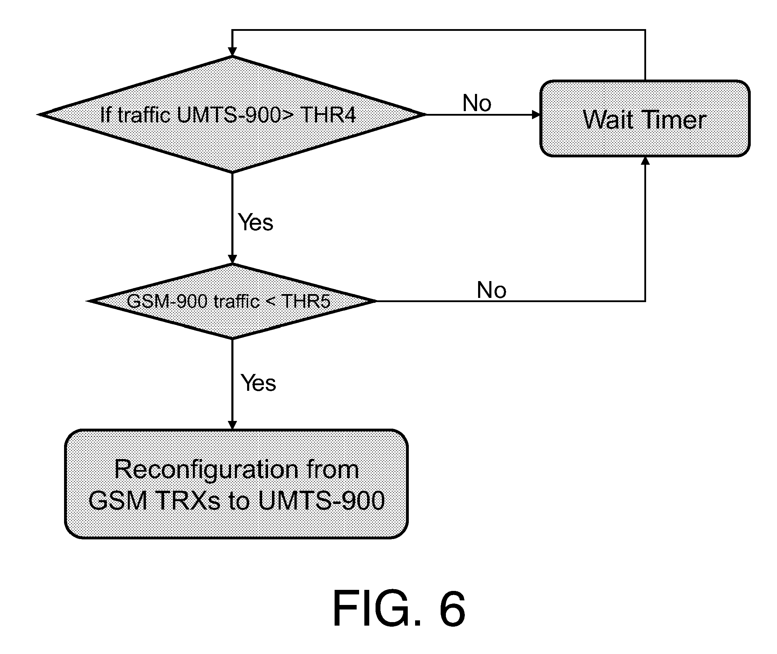

Figure 6 shows a flow diagram of a scenario in which the UMTS-900 radio resources are two or more UMTS-900 carriers. Besides, this scenario assumes that at least one of the UMTS-900 carriers is on and the remaining ones have been reconfigured to GSM-900 resources (TRX), as a consequence of carrying out a method of optimizing the radio resources in the sector (see examples 1 and 2). It is assumed that there are UMTS-900 users (at least one) connected to the UMTS-900 cell.

Besides, the reconfiguration from GSM-900 resources into UMTS-900 resources can be implemented according to different possibilities and conditions, imposed by the operator. Some different possibilities are enumerated next:

If there is at least one user equipment supporting UMTS-900 within the GSM cell or UMTS-900 cell and all the UMTS-900 carriers are OFF except one because they have been previously reconfigured into GSM-900 TRX, two different possibilities can be implemented:
A) The GSM-900 traffic within the cell is checked. If that GSM-900 traffic is above a certain threshold THR5 imposed by the operator, no reconfiguration is done, even if the traffic supporting UMTS-900 is high enough in the cell. This implies that the GSM-900 users are given preference over the new-comer UMTS-900 user.
B) Alternatively, both the GSM-900 traffic and the required UMTS-900 traffic within the cells are checked. Depending on the amount of GSM-900 traffic that can be lost and the amount of UMTS-900 traffic that is being demanded, some GSM-900 resources are reconfigured to a UMTS-900 carrier or not. It is the mobile network operator which imposes both thresholds (a threshold THR5 for the GSM-900 traffic and a threshold THR4 for the UMTS-900 traffic). This is illustrated in figure 6.

### Example 5: The sector also comprises UMTS-2100 resources and at least part of the GSM-900 resources are switched on due to a previous reconfiguration from UMTS-900 resources

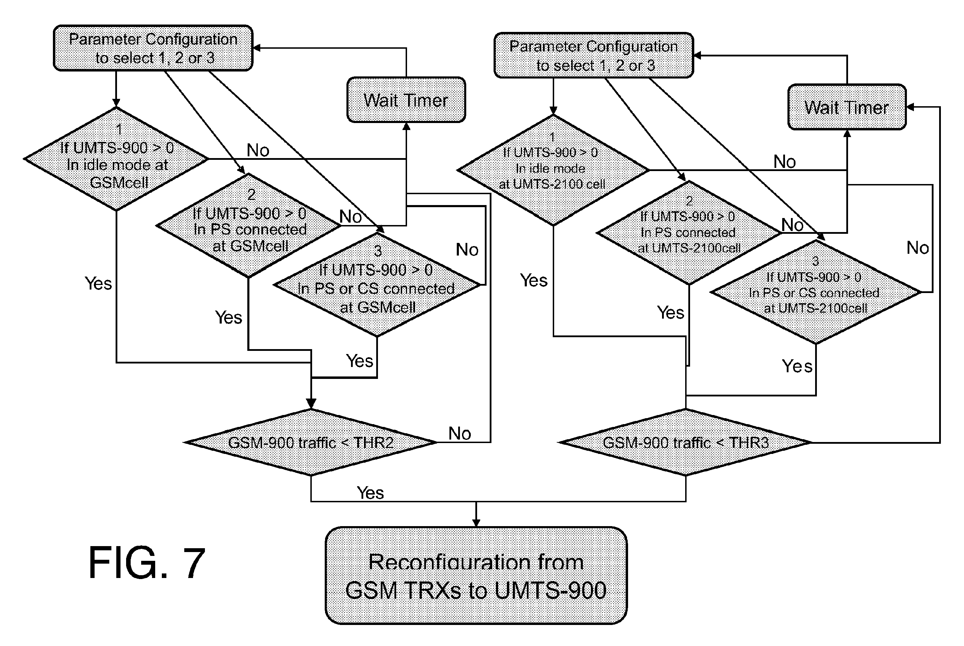

This is a particular situation within the examples 3 and 4. In this scenario, the UMTS-900 radio resources can be one or more UMTS-900 carriers. Besides, the site (see figure 1) also comprises UMTS radio resources in the band of 2100 MHz. Besides, this scenario assumes that the available UMTS-900 carriers have been reconfigured to the GSM-900 resources (TRX), as a consequence of carrying out a method of optimizing the radio resources in the sector (see examples 1 and 2). This is illustrated in figure 7 and can also be applied to the example represented in figure 4.

Once verified that there is at least one user equipment supporting UMTS-900 within the UMTS-2100 cell, if the GSM-900 traffic is above a threshold THR3, the traffic demanded by that user equipment is kept on the UMTS-2100 carrier instead of reconfiguring to a UMTS-900 carrier. It is thus avoided to reconfigure the GSM-900 radio resources.

Like in the previous examples, the mode of operation of the user equipment supporting UMTS-900 detected within the cells can be taken into account when deciding to reconfigure into UMTS-900 or not.

For example, the reconfiguration can be conditioned to the user equipment supporting both UMTS-900 and UMTS-2100 being in packet mode (that is to say, if the user equipment is demanding a UMTS service). Alternatively, it can be conditioned to the user equipment being either in packet mode or in circuit connection. Finally, it can be dependent on whether the user equipment supporting UMTS-900 and UMTS-2100 is in idle mode.

Going back to figure 1, any of the allocations, reallocations and reconfigurations of the invention can be done, either in a single RRU site or in different base stations (located in different sites).

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. A method of optimizing radio access resources within a sector in a mobile network, wherein said sector has at least a GSM cell and a UMTS-900 cell and shares at least GSM-900 cell radio resources and UMTS-900 cell radio resources, the method being **characterised by** the steps of:
- checking at predetermined intervals whether there is at least one user equipment supporting UMTS-900 within said GSM cell or UMTS-900 cell;
- if there are no user equipments supporting UMTS-900 within said GSM cell or UMTS-900 cell, reconfiguring said UMTS-900 radio resources into a plurality of GSM-900 radio resources.

2. The method of claim 1, further comprising the step of:
- if there is at least one user equipment supporting UMTS-900 within said GSM cell or UMTS-900 cell and said UMTS-900 radio resources within the cell are a single UMTS-900 carrier, no reconfiguration is carried out.

3. The method of claim 1, further comprising the step of:
- if there is at least one user equipment supporting UMTS-900 within said GSM cell or UMTS-900 cell and said UMTS-900 radio resources within the cell are a single UMTS-900 carrier, reconfiguring said single UMTS-900 carrier into a plurality of GSM-900 radio resources if said at least one user equipment supporting UMTS-900 is in idle mode.

4. The method of claim 1, further comprising the step of:
- if there is at least one user equipment supporting UMTS-900 within said GSM cell or UMTS-900 cell and said UMTS-900 radio resources within the cell are a single UMTS-900 carrier, reconfiguring said single UMTS-900 carrier into a plurality of GSM-900 radio resources if said at least one user equipment supporting UMTS-900 is either in idle mode or connected with a voice call.

5. The method of claim 1, further comprising the steps of:
- if there is at least one user equipment supporting UMTS-900 within said UMTS-900 cell and said UMTS-900 radio resources within the sector are at least two UMTS-900 carriers, checking whether the aggregated UMTS-900 traffic is under a certain threshold (THR1); and
- if said aggregated UMTS-900 traffic is under said threshold (THR1), reconfiguring at least one of said UMTS-900 carriers into a plurality of GSM-900 radio resources.

6. The method of any preceding claims, wherein said step of checking whether there is at least one user equipment supporting UMTS-900 within said GSM cell is done at the BSC on which said cell is dependent.

7. The method of any preceding claims, wherein said step of checking whether there is at least one user equipment supporting UMTS-900 within said UMTS-900 cell is done at the RNC on which said cell is dependent.

8. The method of any preceding claims, wherein said step of reconfiguring said UMTS-900 radio resources into a plurality of GSM-900 radio resources is done by switching off said UMTS-900 carriers through a NBAP cell delete procedure and by switching on a plurality of GSM-900 TRX.

9. A method of reconfiguring radio access resources within a sector having at least a GSM cell and a UMTS-900 cell in a mobile network, wherein the UMTS-900 cell comprises one UMTS-900 carrier and the GSM cell comprises a plurality of GSM-900 radio resources, and wherein said UMTS-900 carrier has been switched off and at least part of said GSM-900 radio resources have been switched on, the method **characterised by** the steps of:
- checking at predetermined intervals whether there is at least one user equipment supporting UMTS-900 within said GSM cell; and
- if there is no user equipment supporting UMTS-900 within said GSM cell, no reconfiguration is carried out.

10. The method of claim 9, further comprising the steps of:
- when it is detected that there is at least one user equipment supporting UMTS-900 within said GSM cell, checking whether the GSM-900 traffic is below a certain threshold (THR2); and
- if said GSM-900 traffic is below said threshold (THR2), reconfiguring said GSM-900 radio resources into said UMTS-900 carrier.

11. The method of claim 10, wherein, said step of reconfiguring said GSM-900 radio resources into said UMTS-900 carrier is done if said at least one user equipment supporting UMTS-900 is connected in a state for exchanging packet data traffic in the GSM cell.

12. The method of claim 10, wherein said step of reconfiguring said GSM-900 radio resources into said UMTS-900 carrier is done if said at least one user equipment supporting UMTS-900 is connected in a state for packets or circuit.

13. The method of claim 10, wherein said step of reconfiguring said GSM-900 radio resources into said UMTS-900 carrier is done if said at least one user equipment supporting UMTS-900 is in idle mode.

14. The method of claim 9, wherein said sector further comprises a collocated UMTS-2100 cell having UMTS-2100 radio resources, the method having the additional steps of:
- if said at least one user equipment supporting UMTS-900 supports also UMTS-2100, checking whether said GSM-900 traffic is above a threshold (THR3) and, if said GSM-900 traffic is above said threshold (THR3), keeping the traffic associated to said at least one user equipment on said UMTS-2100 radio resources, thus maintaining the corresponding GSM-900 radio resources on.

15. The method of claim 14, wherein said step of keeping said traffic on said UMTS-2100 resources is done if said at least one user equipment supporting UMTS-900 is in a state for exchanging packets.

16. The method of claim 14, wherein said step of keeping said traffic on said UMTS-2100 resources is done if said at least one user equipment supporting UMTS-900 is in a connected state for packets or circuit.

17. The method of claim 14, wherein said step of keeping said traffic on said UMTS-2100 resources is done if said at least one user equipment supporting UMTS-900 is in idle mode.

18. A method of reconfiguring radio access resources within a sector having at least a GSM cell and a UMTS-900 cell in a mobile network, wherein the UMTS-900 cell comprises more than one UMTS-900 carriers and the GSM cell comprises a plurality of GSM-900 radio resources, and wherein one of said UMTS-900 carriers is on and the remaining ones have been switched off and at least part of said GSM-900 radio resources have been switched on, the method **characterised by** the steps of:
checking whether the UMTS-900 traffic is above a certain threshold (THR4); and
- if said UMTS-900 traffic is below said threshold (THR4), no reconfiguration is done; and
- if said UMTS-900 traffic is above said threshold (THR4), checking if the GSM-900 traffic is below a certain threshold (THR5) and:
- if said GSM-900 traffic is below said threshold (THR5), reconfiguring said GSM-900 radio resources into at least part of said UMTS-900 radio resources.
- if said GSM-900 traffic is above said threshold (THR5), no reconfiguration is done.

19. A network entity of a mobile communications network comprising means for carrying out the method of any preceding claim.
